# EUROPEAN PATENT APPLICATION

(11) **EP 3 330 218 A1**
(43) Date of publication of application: **06.06.2018**
(21) Application number: 16201431.0
(22) Date of filing: 30.11.2016
(51) Int. Cl.: B67D 1/00

(54) **METHOD FOR PRODUCTION AND DISPENSING CARBONATED BEER FROM BEER CONCENTRATE**

(71) Applicant: Anheuser-Busch InBev S.A., 1000 Brussels (BE)
(72) Inventor: The designation of the inventor has not yet been filed
(74) Representative: BiiP cvba

(57) **Abstract**

An appliance for the production and dispensing of carbonated beer, wherein the appliance comprise a malt based fermented beverage concentrated inlet, a diluent inlet, a pressurized gas inlet, a carbonation unit (4) having a diluent inlet and a pressurized gas inlet, a mixing unit in which the carbonated diluent and beverage concentrate are mixed and whereby the final constituted beverage has a foam height of at least 6 mm and whereby the foam half life is greater than 15 seconds

## Description

### FIELD OF THE INVENTION

The present invention is directed to a beer beverage dispensing appliance for in situ forming and dispensing a malt based fermented beverage (MBFB) by mixing a carbonated liquid diluent with a MBFB concentrate.

### BACKGROUND

In recent years, home dispensing appliances for domestic use, wherein multiple beverage components or beverages are added to one another so that consumers can create at home their own compositions adapted to their tastes, have become very popular. This trend also applies to fermented beverages, such as malt based fermented beverages (MBFB), like beers of various flavors and types.

A further way, on the one end, for reducing the cost of packaging per unit volume of beer, and, on the other hand, for offering the consumers a large palette of choice is to provide containers filled with MBFB concentrates which can be used alone or admixed with one another and diluted with a liquid diluent. The containers can be in the form of containers as such or as unit doses such as capsule or a pod. By mixing such MBFB concentrates with a liquid diluent a desired beverage can be created *in situ* and subsequently or simultaneously served. The addition and mixing of the liquid diluent to the unit dose is generally carried out in a dispensing appliance.

In situ production and subsequent dispensing of a MBFB comprises mixing an MBFB concentrate stored in one or several containers to be mixed with a carbonated diluent, typically carbonated water or a carbonated base beer characterized by rather neutral flavors profile. The carbonated diluent is a liquid comprising CO₂ at a concentration above saturation at room temperature and atmospheric pressure. It is generally stored or produced *in situ* at a pressure higher than atmospheric pressure, so that the CO₂ is dissolved in the liquid diluent. Upon mixing the carbonated diluent with the MBFB concentrate in a mixing chamber, a pressure drop may cause CO₂ to form froth and foam in the mixing chamber before dispensing. The amount of foam and froth formed depends on the CO₂-concentration, temperature and pressure, but it depends also on the composition of the MBFB concentrate the carbonate diluent is mixed with. For a dispensing appliance designed for dispensing a variety of MBFB's it is therefore not possible to tune the equipment in plant for forming a desired amount of froth applicable to all MBFB varieties. A system "one size fits them all" does not apply here.

The underlying problem to produce the final beer beverage starting from a beer concentrate is to meet as much as possible the specifications assigned to regular not reconstituted beers such as bottled beers , canned beers and especially drafted beers. This problem represents major challenges especially on the consumers acceptance level such as user convenience, mouth feel taste , dispensing rate, foam quality and formation and stability thereof, cost and maintenance.

A first challenge is the carbonation of the beer concentrate itself. In general, carbonation is particular critical for beer, since for consumer acceptance a reasonable foam head in proper dimensions and stability is required. This is only obtainable by the proper concentration of C02 in said beer. Additional technical complexity is that the foam formation and its stability depends on the beer formulation and concentration. For example beer foam comprises polypeptides of different groups with different relative hydrophobicity. As the hydrophobicity of the polypeptide groups increases, so does the stability of the foam.

In general beer concentrates are difficult to carbonate since the product may become foamy after carbonation and therefore difficult to produce and handle especially upon dispensing which is extremely undesirable from a consumer point of view. The foaming of the beer concentrate is not only a function of the volume of carbon dioxide to be added to obtain the dispensed final beer but is also a function of the beer concentrate content and type of final dispensed beer beverage.

From the above, it would be desirable to provide an efficient and effective dispensing appliance for dispensing MBFB by mixing a carbonated diluent with a variety of MBFB concentrates, which is capable of tuning the quality and amount of the foam produced during dispensing of a charge of MBFB into a vessel.

It is equally very important that the level of carbonation be met for a particular type of beer and that the required carbonation level must be delivered and maintained throughout the dispensing and at the time of dispensing enabling the reconstitution of single and/or variable serving volumes of beer comparable to the conditions when dispensing draft beer.

Furthermore, with carbonating concentrated beer, difficulty has been encountered maintaining the proper carbonation required for the different types of beer in combination, especially with the variable serving volumes required by the consumer. As a result, numerous and continuous adjustments of the carbonation process and carbonating equipment are required to meet a specified carbonation level for the particular beer and for the volume of serving.

From a consumer point of view , in general, the presence of carbon dioxide does make beer both more palatable (i.e. mouth feel) and visually attractive. Consumers tend to view a drink as incomplete unless it has a head, and the specific form of head expected for a given type of beer. For example, Perfect Draft Stella, typically has a foam height about 40mm and foam half life time is about 70 seconds in unetched glasses. In addition, the dissolved CO2 is responsible for the flavor. If a beer is not properly saturated the final beer's characteristics of full taste is lacking or a feeling of full taste is not observed. Furthermore, a certain level of carbonation carbon dioxide has a preserving property, having an effective antimicrobial effect against moulds and yeasts.

In addition, there is a need for appliances which operate with increased carbonation effectiveness and efficiency, especially for domestic use. Carbonators are susceptible to considerable pressure drops smaller than for delivery of CO2 gas in large volumes of liquids and need powerful pumps high energy consuming pumps. Some of said carbonators or carbonation systems occupy too much space in a household environment in particular the inline systems operate with too long fluid lines.

Furthermore, the appliance needs to remain clean-in-place (CIP] and which do not leave remains or waste in said system after operation. This is particularly a problem if the same dispense system has to be used for carbonation of different beer concentrate types.

Notwithstanding and given the above, a method and appliance for effectively and efficiently producing a single or multi variable serve beer from disposable beverage containers remains desirable.

The present invention proposes a solution meeting such objectives. These and other objectives of the present invention will be evident when viewed in light of the drawings, detailed description, and appended claims.

### SUMMARY OF THE INVENTION

An appliance for the production and dispensing of carbonated beer, wherein the appliance comprise a malt based fermented beverage concentrated inlet, a diluent inlet, a pressurized gas inlet, a carbonation unit having a diluent inlet and a pressurized gas inlet, a mixing unit in which the carbonated diluent and beverage concentrate are mixed and whereby the final constituted beverage has a foam height of at least 6 mm and whereby the foam half life is greater than 15 seconds.

The present invention is further defined in the appended independent claims. Preferred embodiments are defined in the dependent claims. In particular, in accordance with the present invention, a carbonation unit mix and dispense system is provided for single dose and/or variable

Serving beer from concentrated beer at similar dispense and quality compared to regular not constituted beer with comparable end characteristics with respect to foam height and foam stability, bubble size and/or mouth feel taste

The present invention is, among others, based on the several findings including the finding that, especially at relative low flow velocity, a significant proportion of the CO2 introduced tends to coalesce into larger CO2 bubbles which in turn impacts the dispense, foam stability and taste of the final product. This finding results in a specific architecture for efficient and effective integrated carbonation for dispensing high quality reconstituted beer comparable to not reconstituted beer by means of carbonation with controlled small bubble size generation.

According to another embodiment, the present invention provides for further optimized carbonation systems including criticality of adjustment of static mixer and post carbonation downstream fluid line specifications including adjustment associated with the pore size of the sparger.

### DETAILED DESCRIPTION OF THE INVENTION

The present invention is directed to an appliance for the production and dispensing of carbonated beer, wherein the appliance comprise a malt based fermented beverage concentrated inlet, a diluent inlet, a pressurized gas inlet, a carbonation unit having a diluent inlet and a pressurized gas inlet, a mixing unit in which the carbonated diluent and beverage concentrate are mixed and whereby the final constituted beverage has a foam height of at least 6 mm and whereby the foam half life is greater than 15 seconds. Preferred constituted beverage has a foam height of at least 10, highly preferred at least 20mm. Said preferred beverage has a foam half life greater then 30s highly preferred 60s. In accordance with the purpose of the invention, as embodied and broadly described herein, the present invention relates generally to an appliance and method for increased dissolving with increased saturation efficiency of CO2 into the liquid diluent from a CO2 gas or from gas whereof an essential part is C02. In a certain embodiment present invention concerns enhancing dissolution of CO2 molecules in the liquid diluent from a CO2 gas stream. In accordance with the present invention, the dissolving of CO2 gas in the aqueous liquids is made by the operation of the carbonation unit. The present invention provides for an appliance in accordance with the present invention which allows a selective and controlled generation and increase of the dissolution efficiency of gas compounds especially CO2.

The carbonated diluent is a liquid diluent containing an amount of CO₂ higher than the solubility of CO₂ in said liquid diluent at room temperature and at atmospheric pressure. This means that the carbonated diluent is sparkling with CO₂ bubbles at room temperature and atmospheric pressure. The liquid diluent is preferably water. Other liquid diluents, however, can be used instead of water. In particular, a beer with a rather neutral flavors profile can be used as carbonated diluent. A flavored aqueous solution can also be used. For example, fruity flavors like cherries, peach, and the like to produce fruity beers. Water has the great advantage that the source of carbonated diluent can be a water tap present in all households, equipped with a carbonation station.

In another embodiment, it is provided that the household appliance comprises a mixing device in which the carbonated water and beverage concentrate are mixed. Preferably, the water and the beverage concentrate of the mixing device are fed separately. In a further embodiment, it is provided that the mixing device is disposed after carrying carbonated water, in particular, a good mixing of the carbonated water and the beverage concentrate.

In accordance with another embodiment of the present invention, a household appliance is provided for portioned carbonation and/or flavoring of water, i.e. for producing a carbonated post-mix beverage before, wherein the domestic appliance is a water supply, a carbonation unit for the carbonation of a diluent and a container holder for holding a MBFB concentrate container, wherein the container housing has an opening mechanism for the beverage container with a sealing means.

The diluent is preferably water. In this case, the water supply has in one embodiment a water tank from a user's particular refillable. Preferably, the water tank from the appliance is removable. In another variant, it is provided that the water supply has a fresh water connection which can be connected to a fresh water line and in particular to a household faucet.

Typically the carbonation unit includes a continuous mixer with a connection for the water, a connection for the gaseous C02 and an extraction port for carbonated water. Further, a differential pressure controller for controlling the gas pressure is provided as a function of the water pressure, so that the pressure difference between the supplied water and the supplied C02 is substantially constant. A flow regulator to keep constant the flow rate of the water largely independent of pressure fluctuations is also provided in one embodiment. Preferably, the flow regulator is arranged such that it holds the dispensing amount per unit time constant. Particularly preferably the flow regulator is adjustable so that a desired dispensing quantity per unit time is user adjustable.

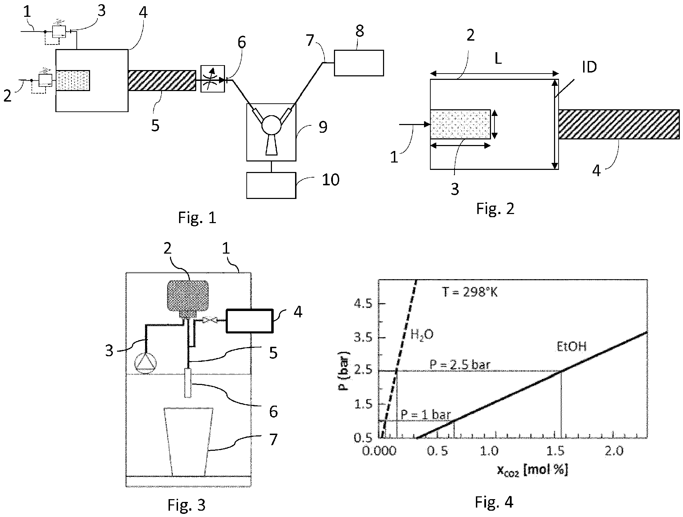

The present invention is, among others, based on the several findings including the finding that, especially at relative low flow velocity, a significant proportion of the CO2 introduced tends to coalesce into larger CO2 bubbles which in turn impacts the dispense, foam formation, foam stability and taste of the final reconstituted beer. According to another finding of the present invention, small CO2 bubbles are produced and maintained up to the mixing with the beer concentrate when the bulk concentration of CO2 is equal or almost equal to the equilibrium concentration of CO2. In accordance with the present invention, this is achieved by introducing the CO2 as small bubbles via for example sparger (Fig 2) and distributing said bubbles equally through the water via mixing. This finding results in a specific architecture for efficient and effective integrated carbonation for dispensing high quality reconstituted beer comparable to draft beer by means of a carbonation unit capable of generating gaseous bubbles having a major dimension between 0,25 and 0,75 mm. By "major" is meant that at least 50% of the bubbles having said dimension. By "average" is meant the number average. The bubbles may have a spherical shape or similar such as elipsoidic shape. The major dimension of the fine bubbles should be understood to be a straight line in-between the two points on the bubble surface which is furthest apart. Bubble size distribution (BSD) was studied with respect to the influence of sparger design and process parameters on the BSD in the sparger region of the carbonator Chemical Engineering Science Volume 57, Issue 1, January 2002, Pages 197-205. Measurements re BSD are generally known in the art and is described in Chemical Engineering Science Volume 47, Issue 5, April 1992, Pages 1079-1089

In accordance with various embodiments, the CO2 gas fluid (Fig 1 (1)) and liquid diluent (Fig 1 (2)) can be combined in a line or fluid conduit (e.g. tube or fluid line) and flow through a zone of reduced pressure. Via an inlet port the CO2 gas fluid is aspirated in the confined environment of the flow. The CO2 gas can be released from a commercially available pressurized CO2 gas storage container or carbon dioxide storage systems or it can be sucked through the inlet port into a zone of the liquid fluid line or fluid conduit (e.g. tube or fluid line) which has a narrower inner diameter than upstream or downstream of the narrower passage so that if operational the liquid in this constricted section of the liquid fluid line or fluid conduit (e.g. tube or fluid line) will induce a pressure drop in the zones compared to directly upstream or downstream or even near vacuum creation that is compensated by aspiration of the CO2 gas fluid through a gas inlet port.

Preferably, the CO2 gas is released through a porous device as vapour bubbles before or in front near or about the zone of the liquid fluid line or fluid conduit (e.g. tube or fluid line) which has a narrower inner diameter than upstream or downstream of the narrower passage or alternatively before or in front near or about the zone in the liquid fluid line or fluid conduit (e.g. tube or fluid line ) which is separated by an in line entrance shield or wall and an outlet shield or wall which comprises openings that are smaller than the inner diameter of the liquid fluid line or fluid conduit (e.g. tube or fluid line ). The CO2 gas fluid and liquid fluid is mixed.

According to the present invention, carbonation units which spray the water into a CO2 rich atmosphere by jetting through slots are preferred carbonator of the present invention.

If needed, post carbonation steps such as further breaking up bubbles by means of shear force could be used prior to mixing with the concentrate.

According to a specific embodiment , the present invention relates to a process for the production of malt based carbonated beverage in which water is carbonated at levels between 2 and 10g CO2/L with an in line carbonation step and whereby the carbonated water is subsequently mixed with beer beverage concentrate sufficient to meet the product requirements.

According to another embodiment, an appliance for the production and dispensing of malt based beer carbonated beverage is provided whereby the appliance comprise a concentrate beverage inlet, a diluent inlet, a pressurized gas inlet, an in line carbonation unit having a diluent inlet and a pressurized gas inlet, a mixing unit in which the carbonated water and beverage concentrate are mixed.

According to a sub embodiment, an appliance is provided whereby the one or more of a beer concentrate is packaged in a multi variable serving beverage container.

According to a further sub embodiment, the carbonation unit is adapted to the portion-wise carbonation of water.

According to yet another embodiment, the appliance further comprises a cooling unit in which the diluent is cooled before carbonation. A non-limiting embodiment of the present invention will be described by way of example with reference to the accompanying drawings, in which:

### BRIEF DESCRIPTION OF THE FIGURES

For a fuller understanding of the nature of the present invention, reference is made to the following detailed description taken in conjunction with the accompanying drawings in which:
Figure 1 shows schematically, the carbonation unit integrated in the appliance in accordance with the teachings of the present invention;
Figure 2 shows a schematic side view of an example of a carbonation unit
Figure 3 shows the saturation concentration of CO2 in water and ethanol depending on pressure at 298 K.
Figure 4. Shows schematic view of the dispensing appliance according to the present invention

According to one embodiment, the appliance comprises a i) beer concentrate inlet, ii) a diluent inlet, iii) a pressurized gas inlet and iv) a carbonation unit located along main fluid line and adding carbon dioxide to the water flowing along the main fluid line (6) Fig 1.

According to another embodiment, the appliance comprises a i) beer concentrate inlet, ii) a diluent inlet, iii) a pressurized gas inlet and iv) a carbonation unit and v) a cooling whereby the carbonation unit is located along main fluid line to cool the water flowing along a first portion of main fluid line, and to add carbon dioxide to the water flowing along a second portion of main fluid line (6) Fig 1.

The appliance comprises a fluid line (7) Fig 1. connected to a supply source to receive a concentrated beer and a metering valve connected to main fluid line (6) Fig 1. to receive the carbonated water and designed to permit controlled outflow of water from main fluid line into a serving container positioned beneath metering valve

As shown in Figure 1, a dispensing appliance according to the present invention is used as follows. A container (7) contains a malt based fermented beverage (MBFB) concentrate and is in fluid communication with a mixing chamber (8). A source (6) of carbonated diluent is in fluid communication with the same mixing chamber. After mixing the MBFB-concentrate with the carbonated beverage, the thus produced MBFB is dispensed out of an outlet of the mixing chamber (8), through a dispensing tube into a vessel (10) i.e. a glass.

As can be seen in Figure 2, the solubility of CO₂ in water increases very steeply with increasing pressure (dashed curve) with about 0.1 to 0.2 mol.% CO₂ at 2.5 bar. CO₂ has a higher solubility in pure ethanol (EtOH) (= solid curve) with about 1.6 mol.% at the same pressure of 2.5 bar. Any aqueous diluent comprising ethanol would yield a CO₂ solubility comprised between these two curves. The curves of Figure 4 show that any variation of pressure in a carbonated diluent may result in CO₂ bubbling or dissolving. This is particularly true for water as liquid diluent, because the straight dashed line in Figure 4 has a very steep slope. This is critical with MBFB's because unlike sodas, once formed foam remains a long time.

According to one embodiment, cooling and carbonation device substantially comprises an in-line cooling unit and an in-line carbonation unit fluid line to respectively cool and add carbon dioxide to the water flowing along main fluid line (6) Fig 1.

More specifically, in-line cooling unit (3) is preferably located along main fluid line upstream from in-line carbonation unit (4), so as to cool the water along a first portion of main fluid line before the carbon dioxide is added.

In the Figure 1, the in-line cooling unit comprises an inlet connected to the supply source by a portion of fluid line to receive water typically at ambient temperature; and an outlet supplying water at a predetermined cooled temperature.

The in-line carbonation unit is located along main fluid line (6) Fig 1., between in-line cooling unit and metering valve and provides for adding carbon dioxide to the water flowing along the second portion of main fluid line (6) Fig 1.

The in-line carbonation unit (4) receives both cooled water at a given pressure from in-line cooling unit and carbon dioxide at a given pressure, and appropriately mixes the two, i.e. water and carbon dioxide, to supply metering valve with cool sparkling water.

More specifically, in-line carbonation unit comprises the second portion of main fluid line (6) Fig 1., which is defined by, preferably, an elongated tubular body in turn comprising an inlet connected to outlet of inline cooling unit to receive cooled water, an inlet connected to a carbon dioxide source and an outlet connected to and for supplying cool sparkling water to metering valve.

The carbonation unit comprises a mixing portion communicating with the inlet where cold/chilled water is introduced. A CO2 line introduces carbonation to the diluent such as water.

Water injectors can also be preferably used in order to produce atomized flow of water entering the CO2 path to enhance uptake of carbon dioxide into the water.

In the Figure 2 for example, the carbonation unit has a tubular body with small inside volume, i.e. is sized to substantially contain a volume of water measurable in tens of milliliters, and preferably equal to 20-30 milliliters, for rapidly mixing the cooled water and carbon dioxide.

Preferred carbonator designs are those whereby the radial distance between the sparger surface and the internal carbonator wall is kept to a minimal (Fig 2. (ID)) and/or whereby the length of the static mixture (FIG 2 (4) is increased and/or whereby the effective area of the sparger is reduced all thereby reducing the bubble coalescence formation within the carbonator.

In another possible embodiment the tubular body may house a perforated tubular membrane or liner, over which water flows on the inside, and pressurized carbon dioxide on the outside. More specifically, water flows longitudinally through the perforated liner, which has a number of transverse holes designed to only let carbon dioxide through to the water, while at the same time preventing outflow of water from the liner. In this way, the carbon dioxide comes into contact with the water at a number of points to rapidly carbonate the water.

In a preferred embodiment of the appliance described above, fluid line (6) Fig 1. may further comprise a static mixture (Fig 1 (5)) post carbonation. The length of the static mixer post carbonation is sufficient such to avoid coalescence of the gas bubbles.

In accordance with the present invention, the in-line process of the water to be carbonated is carbonized during a conveying operation, that is, the water is with C02 enriched while being pumped.

According to the present invention, the appliance further comprises flow adapting means, which, on command, regulate the pressure of the cooled water and/or carbon dioxide to adjust the percentage of carbon dioxide added to the cooled water.

More specifically, flow adapting means may, for example, comprise a non-return valve interposed between outlet of in-line cooling unit and inlet of in-line carbonation unit to prevent carbon dioxide flow to in-line cooling unit in the event the carbon dioxide pressure exceeds the water pressure; and/or a pressurized-water supply pump interposed between outlet and to adjust the pressure of the water supply to in-line carbonation unit on command; and/or a flow regulating device interposed between carbon dioxide source and inlet of in-line carbonation unit to regulate the pressure of the carbon dioxide supply to inlet lib on command.

The flow adapting means are controlled by an electric control unit connected to a setting device , which may preferably, though not necessarily, be located at metering valve to allow the user to adjust the carbon dioxide level in the cool water for dispensing.

More specifically, the appliance may be designed to set two or more carbon dioxide levels ranging between a minimum to a maximum level of carbon dioxide, corresponding to a predetermined maximum value.

An electric control unit receives the set level, and controls flow adapting means accordingly. Flow regulating device may obviously be replaced with an on-off valve or any similar device designed to cut off source from inlet of in-line carbonation unit on command.

If the user selects an intermediate carbon dioxide level, electric control unit controls the flow regulating device to adjust the pressure of the carbon dioxide supply to the inlet of the in-line carbonation unit accordingly.

The supply source provides for continuously supplying the liquid diluent such as water or any other beverage at above atmospheric pressure - normally at about 2-bar pressure - and may comprise a drinking water circuit of the premises in which the appliance is installed for example via filtered tap water supplied by a diaphragm pump. More preferably, the water supply source may be connected to the main fluid line via an on-off valve for isolating supply source from main fluid line on command.

Filters can be used to treat the water coming out of the tap if the quality is not satisfactory. If a carbonated diluent other than carbonated water is used, it can be stored in a vessel.

Alternatively the appliance may comprise a water tanks such as those by known dispensers.

Carbon dioxide source, on the other hand, may comprise a cylinder containing high-pressure carbon dioxide, and for supplying carbon dioxide at a predetermined bar, pressure via a pressure reducer.

Operation of the appliance follows that upon the user selecting a given carbon dioxide level and activated metering valve, the electric control unit controls the flow regulating device to supply the inlet of the in-line carbonation unit with carbon dioxide at a given pressure, and, at the same time, activates on-off valve to allow water to flow along the first portion of main fluid line, i.e. cooling fluid line, where it is cooled by, preferably, a inline cooling unit.

The cooled water then flows along the second portion of main fluid line i.e. through tubular body of in-line carbonation unit, where it is gradually mixed with carbon dioxide. The carbonated water then flows along the end portion of main fluid line to metering valve by which it is dispensed into the container.

In accordance with the specific architecture of the present invention, the appliance of the present invention further prevents, by eliminating the tanks, and the very small water containing capacity of in- with the present invention, line cooling unit (Fig 1 (3)) and in-line carbonation unit Fig 1 (4) - measurable in tens of milliliters - the possibility of mould or bacteria forming in the dispenser, with obvious advantages in terms of user health and hygiene.

In addition, the appliance provides a continuous, fast supply of cooled water with a carbon dioxide percentage varying as required by the user. The user, in fact, can opt to dispense cooled water containing one of a predetermined range of carbon dioxide levels.

When a single container (8) containing an MBFB concentrate is illustrated in Figure 1, more than one container can be used, each containing different components in a concentrated form. One container can also comprise several chambers, each containing corresponding concentrated components. The present invention is not restricted to the number and forms of the containers. The MBFB concentrate is in a liquid form (or pasty) so that it can flow under pressure from the container into the mixing chamber. The MBFB concentrate may comprise solid particles, but they must be in suspension in a liquid medium. A container may contain an amount of MBFB concentrate sufficient for a single dispensing operation into one glass (single dose container) or, alternatively it may contain an amount of MBFB concentrate sufficient for several dispensing operations (= multi-doses container). The latter is more economical in terms of packaging cost per unit volume of MBFB concentrate.

The MBFB concentrate contained in the container Fig 1 (8)/Fig 3 (2) can be obtained by producing a fermented beverage in a traditional manner (e.g., for a beer, by brewing it in any fashion known in the art), followed by concentrating the thus produced fermented beverage. Concentration occurs by removing, on the one hand, a fraction of the water contained therein and, on the other hand, a fraction of the ethanol contained therein. A substantial amount of both water and ethanol can be removed from the beverage by filtration, micro-filtration, ultrafiltration, or nano-filtration, using appropriate membranes well-known to a person skilled in the art.

The flow of MBFB concentrate into the mixing chamber can be driven by gravity only, and controlled by means of a valve but this embodiment is not preferred because it would impose the flow of carbonated diluent to be driven by gravity too, in order to not creating sharp pressure drops at the level of the diluent opening into the mixing chamber. It is therefore preferred to drive the flow of MBFB concentrate either with a pump (not shown) or by pressurizing the interior of the container Fig 3 (2) by means of a source of pressurized gas Fig 3 (3), preferably of pressurized CO₂. The pressurized gas can be stored in a pressure canister. The gas can be pressurized with a pump. Alternatively, if available, a pressurized gas can be available from a network. It is important to be able to control the volume ratio of MBFB concentrate and carbonated diluent fed into the mixing chamber. For this reason, a valve can be provided to control the flow rate of MBFB concentrate and carbonated diluent. Alternatively a volumetric flow controller such as a volumetric pump can be used for controlling the volumes of MBFB concentrate and carbonated diluent fed into the mixing chamber.

For the purposes of the present invention, the term "beer" includes but is not limited to a particular subset of beverages defined as a "beer" under a particular state's laws, regulations, or standards. For example, the German Reinheitsgebot states that a beverage having ingredients other than water, barley-malt, and hops cannot be considered a "beer"- but for the purposes of the present invention, the term "beer" has no such ingredient restrictions. Similarly, for the purposes of the present invention, the term "beer" does not import or imply a restriction on the alcoholic content of a beverage. The present invention both apply to alcoholic and non alcoholic beer beverages.

As those of skill in the art will recognize, the concentrated beverage produced by and for use in various embodiments of the present invention can be produced by a number of different processes, including nanofiltration, ultrafiltration, microfiltration, reverse osmosis, distillation, fractionation, carbon filtration, or frame filtration. The concentration process(es) can be performed with a semi-permeable membrane composed of one or more materials selected from the group consisting of cellulose acetate, polysulfone, polyamide, polypropylene, polylactide, polyethylene terephthalate, zeolites, aluminum, and ceramics.

The processes utilized to produce the concentrated beverage of the present invention can involve one or more concentration steps. In certain embodiments, for example, the beverage may be subjected to a first concentration step (for example, nanofiltration) to obtain a primary beer concentrate (the retentate) and a permeate. The retentate is composed of solids such as carbohydrates, proteins, and divalent and multivalent salts, and the permeate is made up of water, alcohol, and volatile flavor components. The permeate can then be subjected to one or more further concentration steps (for example, distillation or reverse osmosis) to obtain a permeate enriched in alcohol and other volatile flavor components, such as aromas. The retentate from the original step can then be combined with this concentrated permeate to produce a concentrated beer to be packaged in accordance with the methods and devices of the present invention. In certain embodiments of the invention, the resulting concentrated beverage has a sugar content of between about 30 degrees Brix and about 80 degrees Brix, and in further embodiments, a sugar content of between about 50 degrees Brix and about 70 degrees Brix. In other embodiments of the invention, the concentrated base liquid has a sugar content of between 10 and between 30 degrees Brix. In these embodiments, the concentrated beverage may have an alcohol content of between about 2 ABV to about 12 ABV, between about 10 ABV to about 14 ABV, or between about 50 ABV to about 70 ABV.

In preferred embodiments of the invention, to produce one or more variable servings of a beverage from the concentrated beer beverage, the container is unsealed (by puncturing the metal cap on the container or by other techniques well-known to those skilled in the art) to produce variable multi serving of the final resulting beer beverage.

The beer container can be in the form of a can, bag, cup or box having a single compartment or having a first compartment and a second compartment therein. Also preferably, the bag, cup or box is formed of aluminium, plastic, glass, and/or metal foil. Moreover, the first compartment and the second compartment can each include an opening mechanism such that the first compartment and the second compartment are simultaneously opened in the dispensing apparatus or prior to insertion into the dispensing apparatus in one or more locations by piercing, tearing, or removal of a lid portion from each of the first compartment and the second compartment. In addition, the beverage container includes a third compartment operable to contain an additional beverage concentrate or other desirable ingredient.

In certain exemplary embodiments of the invention, water added to the concentrated beverage to produce a beverage suitable for consumption is hyper carbonated water.

In some preferred embodiments, the concentrated beverage is a concentrated high-gravity beer to which water is added, which dilutes the beer and produces a beverage. In these embodiments, the addition of water results in a beer having a sugar content of about 1 degrees Brix to about 30 degrees Brix and an alcohol content of about 2 ABV to about 16 ABV. In an exemplary embodiment, the resulting beer has a sugar content of between 4 and 7 degrees Brix and an alcohol content of between 2 ABV and 8 ABV. In another exemplary embodiment, the resulting beer has a sugar content of about 17 degrees Brix and an alcohol content of between 8 ABV and 12 ABV. In various embodiments, the resulting beer has an alcohol content of between 2-4 ABV, between 4-6 ABV, between 6-8 ABV, between 8-10 ABV, or between 10-12 ABV.

While the above-described embodiments discuss diluting the concentrated beverage with liquid, those of skill in the art will readily recognize that other liquids besides water can be added to the concentrated beer beverage to produce a final beer beverage.

In certain embodiments of the present invention, one or more flavor ingredients can be added to the concentrated beverage to produce a final beverage. Examples of suitable flavor ingredients include (but are not limited to) a spice flavor, a fruit flavor, a hop flavor, a malt flavor, a nut flavor, a smoke flavor, other suitable flavors (such as a coffee flavor or a chocolate flavor), and mixtures of such flavors.

Moreover, other concentrated ingredients can be added or combined with the concentrated beverage to produce a final beverage, including but not limited to other concentrated beverages.

These concentrated ingredients can be, for example, solid or liquid ingredients such as hop concentrates, fruit concentrates, sweeteners, bittering additives, concentrated spices, foaming promoters, concentrated malt-based liquids, concentrated fermented liquids, concentrated beer, colorants, flavoring additives, and mixtures thereof. In some cases, the concentrated ingredients (for example, concentrated beers) may be alcoholic concentrated ingredients.

In accordance with the embodiments of the present invention, the quantity of concentrated beverage packaged in the container is measured so that multiple serving of a beverage can be prepared from the concentrated beverage in the container. In other embodiments of the present invention, the concentrated beverage is packaged in a quantity suitable for producing multiple servings of a beverage. In some of these embodiments, the multiple servings of the beverage are produced in a single mixing step. In other embodiments, the concentrated beverage can be repeatedly mixed with liquid to prepare successive single servings of the beverage.

In an exemplary embodiment of the present invention, an appliance for preparing a beverage from a beer beverage concentrate is provided. The appliance comprises a receptacle for intake of at least one container in which the beer beverage concentrates are packaged, at least one liquid intake for the intake of water (and equivalent liquids), at least one mixing element in which the beer beverage concentrate is mixed with the carbonated water (or other liquid) to produce a beverage, and an outlet from which the resulting beer beverage is dispensed.

By one portion according to the invention is meant an amount that corresponds to a domestic quantity of product to be produced beverage. In particular a beverage serving is an amount from about 20 ml to about 1000 ml, more preferably about 100 ml to about 500 ml, even more preferably about 100 ml to about 300 ml, more preferably about 200 ml. The serving size of a beverage can, for example, depend on a selected container size or glass size. Further, the serving size of a chosen mixing ratio of water and beverage concentrate may depend. Particularly preferably, the serving size of a user can be selected. A portion packaged beverage concentrate comprises according to one embodiment of the invention, a beverage concentrate quantity sufficient for producing a beverage serving. In another embodiment, a portion-wise packaged beverage concentrate comprises a lot of beverage concentrate, which is sufficient to produce the largest selectable beverage serving. For example, the largest selectable beverage serving approximately correspond to 400 ml beverage. However, should a user a beverage serving size of about 200 ml to be selected, is provided in a first embodiment, two servings are produced by means of portions packaged beverage concentrate. In a second embodiment, it is provided that by means of portions packaged beverage concentrate to a beverage serving is produced which particularly includes a higher concentration of the beverage concentrate. In a further embodiment, a portions packaged beverage concentrate on a lot of drink concentrate that is sufficient for the preparation of a beverage serving with an average amount, for example, about 200 ml. Preferably, the concentration of the beverage concentrate can be varied by the portion size in the finished beverage that is increased or decreased to.

In one embodiment it is provided that the carbonation by means of an inline process water will have a C0 2 content of about 2 g / I to about 10 g / I, preferably about 4 g / L to about 8 g / I, more preferably about 4 g / I to about 8 g / I and in particular about 6 g / I. Preferably, the beverage concentrate comprises about C0 2 at concentration that is present in the final finished product or to be present. This has the advantage that the carbonated water produced in the domestic appliance must have not higher C0 2 concentration than is provided in the finished beverage. The addition of beverage concentrate thus does not reduce the total concentration of C0 2 in the finished beverage.

### Examples:

An appliance with an in line carbonation , mix and dispense system (Fig 3) was developed and tested resulting in the reconstitution of single and variable serving volumes of beer from a concentrated beer at same dispense rate and at similar quality (carbonation, bubble and foam characteristics, mouth feel ) compared to not constituted regular beer.

The examples also demonstrate that preferred carbonation unit include in line carbonation Fig 3 (4) system including a static mixture as the carbonator operates at lower velocities compared to commercial in line carbonators.

A diaphragm pump can be used to pressure water feed into the in line carbonator. In turn, the dispense rate can be further controlled by the difference of between the gas pressure and the water pressure. Water can be carbonated up to 4.4 g L-1 measured after dispense at atmospheric pressure. At a dispense rate of 1,1 L /min the carbonation was 4,1g L-1. Water temperature is typically at 2 C before carbonation.

Water feed into carbonator was pressurized to 3,6 bar and CO2 supplied at 3,9 bar dispense flow rate 1,3L/min and carbonation of dispensed beer was 3,0g/L.

Carbonation performance was further improved by increased water pressure, as long as the CO2 pressure ranged from 0 to 1.2 bar greater than the water pressure.

The beer concentrate used is a STELLA and LEFFE and is a 3X concentrate from an airline-pressurized keg at pressure up to 7 bar. Fluid line (7) Fig 1. used is a 2.5 mm diameter tube.

Fluid line (6) Fig 1. used is a 2.5 mm diameter tube coupled to a second tube with 8.4 mm diameter tube. Carbonator (Fig 2) L: 5 cm ; ID 2,0 cm, sparger (3 -Komax sparger: 2,2 cm. Radial distance between sparger and pipe wall 0.55 cm.

Static mixer (Komac) 1,27 cm diameter and 15,2 cm. Flow rate 1 L/min.

The carbonated water was mixed with the beer concentrate in line in a 2:1 ratio. Pneumatic airline Y-connections were used with different size diameter for the carbonated water inlet and the concentrate. Concentrate was supplied at 0,5 bar.

The reconstituted beer was dispensed at 1,5 L/min- 2 L/min

### Protocol:

The following protocol **was designed** to measure parameters relating to beer foam and beer bubbles to compare selected characteristics of reconstituted beer from the inline carbonation with commercially available bottled, canned and draft beers, as well as batch-carbonated reconstituted beers.

This protocol comprises:
1. Protocol for dispensing beer, detailing Glass type/ Temperature of the beer and beer glass/ Surface condition of the glass/ Angle of beer dispense into glass
2. Bubble and foam measurement protocol, comprising Foam height and half-life measurements and measurement of representative bubble diameter within the foam and measurement of the bubble diameter and distribution within the beer and qualitative evaluation of foam creaminess

### Protocol for dispensing beer:

In order to eliminate the impact of the glass on key foam and bubble parameters when cross comparing different beers, we standardize the glass type for our investigations All beer products shall be poured into Perfect Pint Activator Max 20oz Beer glasses. Made from toughened beer glass and CE marked and formed in a classic conical shape and 160 mm in height and has a laser etched bubble nucleation area at the bottom of the glass.

The temperature of beer glasses at the point of dispense is 15 ± 3 ºC controlled the glass temperature by submerging beer glasses in a water bath set at 15 ºC measured by a thermocouple prior to testing

Dispensed beers shall be served chilled, with canned and bottled beers kept in the fridge prior to dispense, draft beers served at chilled temperature provided by the dispense system. Inline and batch-carbonated reconsitituted beers served at a target temperature of 2 ºC. The temperature of the dispensed beer shall be measured after video footage has been taken, at 3 minutes after dispense. All glasses shall be cleaned using a soft sponge and tap water before being submerged in the temperature controlled water bath. Immediately prior to dispense, the glasses shall be removed from the water bath and dried crudely by shaking away excess water.

### Standardize beerdispense methods foreachtype of beersource

For Perfect Draft, the dispense procedure is as detailed on the user's manual. For bottled and canned beers, the glass is tilted 45º and pour the bottle/can close the glass but not touching **the glass.** Once the beer level reaches 1/3 of the glass, we shall straighten up the glass and slowly pour more beer in until the beer level reaches 1/2 of the glass (7cm from the bottom). For batch carbonated beer, the beer dispensing tube shall be positioned vertically towards the beer glass while the glass shall be held at 45 degree angle. For in-line carbonated beer, the dispense nozzle angle is at approximately 30º to the vertical and initially line up the glass at 45º. Flow is channeled down the side of the glass. Once the beer level reaches approximately half way up the glass, the glass shall be gradually tilted vertically

### Protocol for bubble and foam measurement

Beer bubble and foam measurements are analysed utilizing video and photography techniques. iDS cameras are used to record videos and pictures of bubbles in the beer and foam formed on the surface of the glass. ImageJ software is used to analyse the videos and photographs to quantify foam height and half-life, a representative bubble diameter within the foam, bubble diameter distribution within the beer. A separate hand-held camera is be used to capture visual information of the beer, which is used to support a qualitative evaluation of the foam.

### Experimental arrangement

A beer glass is placed onto the reference position on the test bench Two iDS cameras are positioned on the test bench by two tripods, respectively
Camera 1 (colour) focuses on the centreline of the beer enabling the monitoring beer bubbles rising along the central axis of the beer glass
Camera 2 (monochrome) focuses on the front surface of the glass to enable monitoring of the foam
A ring light is fixed behind the beer glass to provide uniform illumination
A black background behind the ring light enhances contrast
The height of the foam shall be measured as a function of time by noting the distance between the interface of beer/foam and the shadow line indicating the foam/air boundary at the central axis of the glass, at 30 second intervals from video footage captured by camera 2 Fitting a logarithmic equation to the height versus time data provides the foam half-life
Record subsequent foam heights at 30 s, 1.0 minute, 1.5 minutes, 2.0 minutes and 4.0 after the first image and calculate the half-life by fitting the data to a logarithmic decay. A separate, hand-held camera is utilised to take photographs of the dispensed beer foam from the top of the glass, and from the side, to enable the visual evaluation of creaminess. The creaminess of the foam based on visual appearance on a scale of 1 to 5

### Data:

Draft (via Perfect Draft system)
Carbonation level 3,2g L-1 (variation 0,29) measured by CarboQc analyzer.
Average Bubble size 0,3-0,4 mm
Foam (formation, stability, foam height and foam half life)
Creamy and stable for STELLA Perfect Draft STELLA Bottle STELLA Can.
STELLA Perfect Draft 47,3 ± 4,2mm, 71,3 ± 11s ;
STELLA Bottle 7 ± 1,5mm, 18,7 ± 2,8s ;
STELLA Can 9,2 ± 2,7mm, 16 ± 1s
Data re Reconstituted STELLA met the results of STELLA Can, STELLA bottled, STELLA Perfect Draft resulting in similar carbonation product requirements and foam formation and quality and bubble size parameters. Similar conclusion with LEFFE.

In accordance with the various experiments, preferred executions are those were the radial distance between the sparger surface and the internal carbonator wall is kept to a minimal to increase the annular velocity of the water leading to efficient distribution of CO2 within the water and improved dissolution of CO2 and limiting thereby coalescence of the bubbles within the carbonator.

In accordance with the various experiments, preferred executions are those were the length of the static mixture is increased leading to higher carbonation efficiency by improved dissolution of CO2 and limiting thereby coalescence of the bubbles within the carbonator, in turn smoothing the flow.

In accordance with the various experiments, reduction of the effective area of the sparger was found beneficial to smoothen the flow rate by reducing less gas and hence, less coalescence.

## Claims

1. An appliance for the production and dispensing of carbonated beer, wherein the appliance comprise a malt based fermented beverage concentrated inlet, a diluent inlet, a pressurized gas inlet, a carbonation unit having a diluent inlet and a pressurized gas inlet, a mixing unit in which the carbonated diluent and beverage concentrate are mixed and whereby the final constituted beverage has a foam height of at least 6 mm and whereby the foam half life is greater than 15 seconds.

2. An appliance according to claim 1 whereby the carbonation unit is capable of generating gaseous bubbles having an average major dimension of less than 0,75mm, preferably less than 0,50 mm, highly preferably between 0,25 and 0,75 mm

3. An appliance according to claim 1-2 whereby the diluent contains between 5 and 10g CO2/L at the mixing unit inlet

4. An appliance according to claim 1-3 wherein said carbonation unit is an in line carbonation unit.

5. An appliance according to claim 1-4 further comprising a flow rate controller regulating the flow rate through the liquid line and whereby the flow rate controller regulates the residence time of the liquid such as to maintain the gas dissolved in the liquid.

6. An appliance according to claims 1-5 further comprising gas pressure regulating means for varying the gas at the inlet of the carbonation unit and a diluent pressure control unit allowing to control the pressure on the diluent at the diluent inlet of the carbonation unit and/or in the liquid line.

7. An appliance according to claim 6 whereby the diluent pressure controller allows the pressure in the liquid line to be sufficiently high to maintain the gas dissolved in the liquid.

8. An appliance according to claims 1-7 whereby the pressure of the liquid diluent is up to 6 bar and the pressure of the gas is up to 6 bar and whereby the CO2 pressure being equal or 1.2 bar higher than the CO2 pressure

9. An appliance (1) according to claim 1-8, **characterized in that** the carbonation unit is adapted to the portion-wise carbonation of diluent.

10. Appliance (1) according to one of claims 1-9, **characterized in that** the appliance (1) comprises a cooling unit in which the diluent is cooled before carbonation.

11. Appliance (1) according to one of claims 1-10, **characterized in that** the appliance (1) further comprises a reservoir for gaseous C02 with communication that, in the C02 - reservoir stored C02 can be introduced into the diluent.

12. Appliance according to claims 1-11 further comprising a sparger and a static mixer

13. Appliance according to claims 1-12 which is a domestic appliance

14. Appliance according to claims 1-13 whereby the volume ratio of carbonated water to concentrate is at least 3:1

15. Appliance according to claims 1-14 whereby the carbonated water is subsequently mixed with a multi variable serving MBFC concentrate.
